(19) Europäisches Patentamt
European Patent Office
Office européen des brevets

(11) EP 3 484 720 B1

(12) # FASCICULE DE BREVET EUROPEEN

(45) Date de publication et mention de la délivrance du brevet:
**13.05.2020 Bulletin 2020/20**

(21) Numéro de dépôt: **17745442.8**

(22) Date de dépôt: **17.07.2017**

(51) Int Cl.:
*C08L 13/00* (2006.01) *B60C 1/00* (2006.01)
*C08F 236/10* (2006.01) *C08F 236/06* (2006.01)
*C08F 212/08* (2006.01) *C08F 220/18* (2006.01)
*C08K 3/36* (2006.01) *C08K 3/04* (2006.01)

(86) Numéro de dépôt international:
**PCT/FR2017/051944**

(87) Numéro de publication internationale:
**WO 2018/015646 (25.01.2018 Gazette 2018/04)**

(54) **COMPOSITION DE CAOUTCHOUC COMPRENANT UN ÉLASTOMÈRE DIENIQUE COMPRENANT DES FONCTIONS CARBONATES**

KAUTSCHUKZUSAMMENSETZUNG MIT EINEM DIENELASTOMER MIT FUNKTIONELLEN CARBONATGRUPPEN

RUBBER COMPOSITION INCLUDING A DIENE ELASTOMER COMPRISING CARBONATE FUNCTIONAL GROUPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2016 FR 1656824**

(43) Date de publication de la demande:
**22.05.2019 Bulletin 2019/21**

(73) Titulaire: **Compagnie Générale des Etablissements Michelin**
**63000 Clermont-Ferrand (FR)**

(72) Inventeurs:
- **JEAN-BAPTISTE-DIT-DOMINIQUE, François**
**63040 Clermont-Ferrand Cedex 9 (FR)**
- **MATMOUR, Rachid**
**63040 Clermont-Ferrand Cedex 9 (FR)**
- **JASSELIN, Adeline**
**63040 Clermont-Ferrand Cedex 9 (FR)**
- **SCHNELL, Benoit**
**63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 0 001 088**
**EP-A1- 0 890 607**
**WO-A1-2012/043136**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 484 720 B1

## Description

Le domaine de la présente invention est celui des compositions de caoutchouc diénique, en particulier des compositions de caoutchouc diénique pour pneumatique.

Idéalement, une composition de caoutchouc destinée à être utilisée dans un pneumatique doit obéir à un grand nombre d'exigences techniques. L'une d'entre elles est la cohésion de la composition de caoutchouc. Une bonne cohésion d'une composition de caoutchouc se traduit généralement par un bon niveau de renforcement de la composition de caoutchouc. Le renforcement d'une composition de caoutchouc peut être amélioré en introduisant dans la composition de caoutchouc des charges renforçantes, des agents de couplage destinés à coupler le caoutchouc et la charge renforçante ou encore des élastomères fonctionnels. Parmi les élastomères fonctionnels connus pour améliorer le renforcement d'une composition de caoutchouc, on peut citer les élastomères portant par exemple des fonctions silanol, alcoxysilane, acide carboxylique comme cela est décrit par exemple dans les documents WO 2001090237. Il est également connu que le renforcement d'une composition comprenant un polymère diénique et une silice requiert l'utilisation d'un agent de couplage comme cela est décrit dans les demandes de brevet des Demanderesses, en particulier dans le document WO 2001090237 mentionné précédemment. Pour des raisons de coût de production de la composition, il peut être d'intérêt de supprimer l'agent de couplage. Par conséquent, il est toujours une préoccupation de pouvoir disposer de nouveaux polymères fonctionnels qui permettent d'améliorer le renforcement d'une composition polymère comprenant une charge renforçante.

Les élastomères diéniques portant des fonctions carbonates -O-CO-O- présentes dans des cycles 1,3-dixolan-2-one sont connus pour être utilisés comme électrolytes dans des membranes comme cela est décrit dans les documents US 20070191578 et WO 2014032803. En revanche, ils ne sont pas décrits comme ingrédient d'une composition de caoutchouc.

Les Demanderesses ont découvert que l'utilisation dans une composition de caoutchouc d'un élastomère diénique portant des fonctions carbonates présentes chacune dans des cycles 1,3-dioxolan-2-one permet d'améliorer le renforcement de la composition de caoutchouc comprenant une charge renforçante, même en l'absence d'agent de couplage dans le cas où la charge renforçante est une silice.

Ainsi un premier objet de l'invention est une composition de caoutchouc à base d'une charge renforçante et d'un élastomère comprenant des unités d'un monomère 1,3-diène et portant des fonctions carbonates présentes chacune dans un cycle 1,3-dioxolan-2-one.

L'invention concerne aussi un pneumatique qui comprend la composition de caoutchouc conforme à l'invention.

L'invention porte également sur un procédé pour préparer la composition de caoutchouc conforme à l'invention en présence d'un agent de réticulation.

## I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

Dans la présente demande, on entend par fonction carbonate le groupe de formule -O(C=O)O-. La fonction carbonate utile aux besoins de l'invention se trouve dans une structure cyclique, puisqu'elle est présente sous la forme du cycle 1,3-dioxolan-2-one.

Dans la présente demande, on entend par unité monomère 1,3-diène, une unité qui résulte de l'insertion d'un monomère 1,3-diène dans une chaîne polymère en croissance. De façon connue, les unités d'un monomères 1,3-diène peuvent résulter d'une insertion 1,2 ou 1,4 du monomère 1,3-diène dans la chaîne polymère. Dans le cas d'une insertion 1,4, elles peuvent se présenter sous la configuration cis ou trans.

Dans la présente demande, le mot (méth)acrylate désigne indifféremment acrylate et méthacrylate.

Dans la présente description, l'expression « pendant » relatif à la fonction carbonate est utilisé dans le même

sens que le terme « pendant » utilisé dans la définition de « groupe pendant » donnée par IUPAC, PAC, 1996, 68, 2287.

L'élastomère utile aux besoins de l'invention comprend des unités d'un monomère 1,3-diène. A titre de monomère 1,3-diène, on peut citer ceux ayant 4 à 8 atomes de carbone, comme par exemple le 1,3-butadiène, le 2,3-diméthyl-1 ,3-butadiène, l'isoprène, le pipérylène. Conviennent également leurs dérivés halogénés, comme par exemple le chloroprène. Le monomère 1,3-diène peut aussi consister en un mélange de ces monomères, auquel les unités monomères 1,3-diène sont constituées des unités monomères de chacun des monomères composant le mélange. De préférence, le 1,3-diène est le 1,3-butadiène, l'isoprène ou leur mélange. De manière plus préférentielle, le 1,3-diène est le 1,3-butadiène.

Selon l'un quelconque des modes de réalisation de l'invention, les unités monomères 1,3-diène représentent de préférence plus de 50% en masse du polymère.

Selon l'un quelconque des modes de réalisation de l'invention, les unités monomères 1,3-diène résultant d'une insertion 1,4 dans la chaîne polymère représentent préférentiellement plus de 15%, plus préférentiellement plus de 30% en mole des unités monomères 1,3-diène.

L'élastomère utile aux besoins de l'invention porte aussi des fonctions carbonates qui sont présentes chacune dans un cycle 1,3-dioxolan-2-one. En présence de la charge renforçante comme un noir de carbone ou une silice, il est supposé que les fonctions carbonate établissent des interactions avec la charge par l'intermédiaire de fonctions chimiques présentes sur la charge, ce qui permet d'améliorer le renforcement de la composition de caoutchouc.

De préférence, les fonctions carbonate sont pendantes et situées en dehors des extrémités de chaîne de l'élastomère. La présence de cycles 1,3-dioxolane-2-one pendants et situés en dehors des extrémités de chaîne du polymère améliore encore davantage les propriétés de renforcement dans la composition de caoutchouc contenant une charge renforçante, même en l'absence d'un agent de couplage dans le cas où la charge renforçante est une silice. En particulier, la position pendante des fonctions carbonates rend les fonctions carbonate plus accessibles aux fonctions chimiques présentes à la surface de la charge renforçante, ce qui favorise l'interaction entre les fonctions carbonate et la charge renforçante.

De manière encore plus préférentielle, les fonctions carbonate sont présentes dans des unités monomères d'un monomère vinylique au moins substitué par un groupe contenant un cycle 1,3-dioxolan-2-one.

Le monomère vinylique est préférentiellement un monomère vinylique contenant le groupe 2-oxo-1,3-dioxolan-4-yle de formule (I).

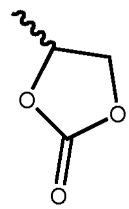

(I)

L'homme du métier comprend que le symbole 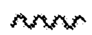 utilisé dans la formule (I) représente un rattachement du CH du cycle au monomère vinylique .

De manière plus préférentielle, le monomère vinylique présente le motif CH2=C<. La présence de ce motif dans le monomère vinylique favorise la copolymérisation du monomère vinylique avec le 1,3-diène dans la synthèse de l'élastomère utile aux besoins de l'invention.

Selon un mode de réalisation particulier, le monomère vinylique est un monomère (méth)acrylate de formule (II). Le monomère vinylique peut être aussi un mélange de (méth)acrylate de formule (II) qui se différencient les uns des autres par les groupes $R_1$ ou $R_2$.

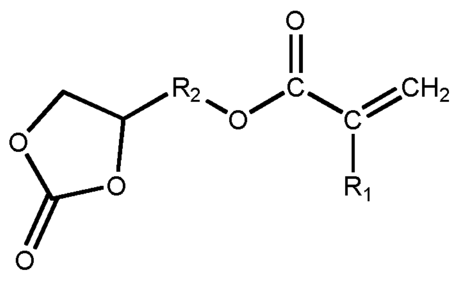

(II)

dans laquelle

$R_1$ est un hydrogène ou un méthyle,
$R_2$ est une chaîne hydrocarbonée pouvant être interrompue ou substituée par un ou plusieurs hétéroatomes.

De préférence, le monomère (méth)acrylate de formule (II) est choisi dans le groupe constitué par les composés de formule (III), (IV), (V) et leurs mélanges.

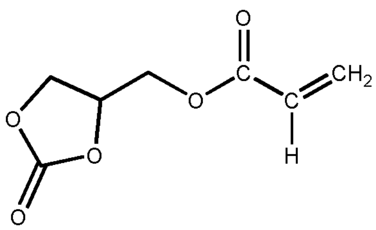

(III)

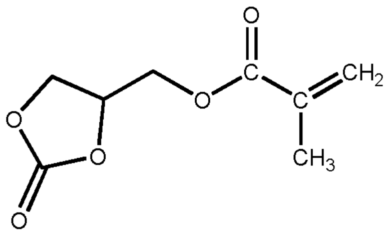

(IV)

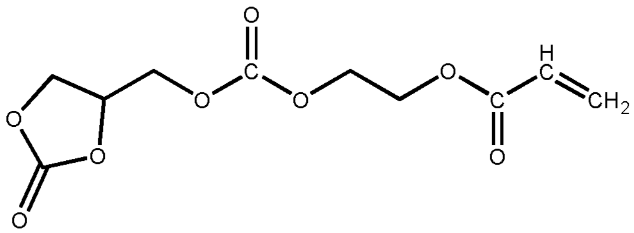

(V)

De manière plus préférentielle, le monomère (méth)acrylate de formule (II) est le composé de formule (III), le composé de formule (IV) ou leur mélange.
Le taux de fonctions carbonate est compris de préférence entre 0.1 et 20 moles pour 100 moles d'unités monomères constituant l'élastomère utile aux besoins de l'invention. En deçà de la valeur de 0.1, l'amélioration du renforcement dans la composition de caoutchouc peut être jugé insuffisante pour certains composants caoutchouteux du pneumatique qui sont très sollicités par des fortes déformations à contrainte élevée. Au-delà de la valeur de 20, l'amélioration du renforcement s'accompagne d'une rigidification de la composition polymère qui peut être jugée trop forte pour certains composants caoutchouteux du pneumatique qui doivent être suffisamment déformables par exemple pour amortir des chocs. Pour certaines applications, le taux de fonctions carbonate est plus préférentiellement compris entre 0.1 et 5 moles pour 100 moles d'unités monomères constituant l'élastomère utile aux besoins de l'invention.
Selon un mode de réalisation de l'invention, l'élastomère utile aux besoins de l'invention contient aussi des unités d'un monomère vinylaromatique. Comme monomère vinylaromatique conviennent par exemple le styrène et les composés aromatiques comportant une double liaison polymérisable par voie radicalaire, comme par exemple les composés issus de l'alkylation du styrène, de l'halogénation du styrène, de l'haloalkylation du styrène et les dérivés éthers du styrène. De préférence, le monomère vinylaromatique est le styrène.
Selon ce mode de réalisation particulier de l'invention, les unités du monomère vinylaromatique représentent préférentiellement moins de 45%, plus préférentiellement moins de 35% en masse de l'élastomère utile aux besoins de l'invention.
Selon une première variante préférentielle de l'invention, l'élastomère utile aux besoins de l'invention est un copolymère d'un 1,3-diène et d'un monomère vinylique au moins substitué par un groupe contenant un cycle 1,3-dioxolan-2-one, le 1,3-diène et le monomère vinylique étant définis selon l'un quelconque des modes de réalisation de l'invention.
Selon une deuxième variante préférentielle de l'invention, l'élastomère utile aux besoins de l'invention est un terpolymère d'un 1,3-diène, d'un monomère vinylique au moins substitué par un groupe contenant un cycle 1,3-dioxolan-2-one et d'un monomère vinylaromatique, le 1,3-diène, le monomère vinylique et le monomère vinylique étant définis selon l'un quelconque des modes de réalisation de l'invention
Les modes préférentiels déclinés dans les modes de réalisation de l'invention décrits précédemment peuvent aussi s'appliquer autant à la première qu'à la deuxième variante.
Selon l'un quelconque des modes de réalisation de l'invention, la fonction carbonate peut être apportée le long de la chaîne de l'élastomère par polymérisation radicalaire d'un mélange monomère comprenant le 1,3-diène, le monomère vinylique au moins substitué par un groupe contenant un cycle 1,3-dioxolan-2-one, et le cas échéant le monomère vinylaromatique.

La polymérisation radicalaire peut être menée en suspension ou en émulsion, de préférence en émulsion pour favoriser l'uniformité de la taille des particules et l'obtention de chaines macromoléculaires de haut poids moléculaires.

Pour amorcer le mécanisme de polymérisation radicalaire, il est possible d'utiliser l'ensemble des amorceurs de radicaux libres usuels. Les amorceurs de radicaux peuvent être le peroxyde d'hydrogène, des peroxydes organiques tels que le peroxyde de cyclohexanone, le peroxyde de benzoyle, le peroxyde de lauroyle, l'hydroperoxyde de tert-butyle, l'hydroperoxyde de cumène, l'hydroperoxyde de p-menthane, le peroxyde de di-tert-butyle et le peroxyde de dicumyle, des composés azoïques tel que l'azobisisobutyronitrile ou le dihydrochlorure de 2,2'-azo-bis-(2-methylpropionamidino), des peroxydes inorganiques, comme le persulfate de potassium, de sodium ou d'ammonium.

Les composés mentionnés ci-dessus peuvent également être utilisés dans des systèmes redox, dans lesquels des sels de métaux de transition, comme le sulfate ferreux ou le pyrophosphate de fer(II) sont impliqués. De manière préférée, le ou les sels de métaux de transition représentent de 0.01 à 10 pce, en particulier de 0.1 à 5 pce. Ces sels de métaux de transition peuvent être éventuellement associés à des agents réducteurs. A titre d'agent réducteur, on peut citer le formaldéhyde-sulfoxylate de sodium dihydraté (Rongalit®), le mélange technique de di-sodium de 2-hydroxy-2-sulfinate, de di-sodium de 2-hydroxy-2-sulfonate et du sulfite de sodium (Bruggolite FF6® ou Bruggolite FF7®), le but-1-ène-3-ol, les sels d'hydroxylamine, le sodium dialkyldithiocarbamate, le bisulfite de sodium, le bisulfite d'ammonium, le dithionite de sodium, , l'acide ascorbique, l'acide tartrique, l'acide érythorbique, l'acide borique, l'urée, l'acide formique. De manière préférée, le ou les sels de métaux de transition représentent de 0.01 à 10 pce, de préférence de 0.1 à 5 pce.

Les amorceurs peuvent être utilisés seuls ou en combinaison de deux ou plus. De manière préférée, le ou les amorceurs représentent de 0.1 à 10 pce, en particulier de 0.2 à 10 pce, plus préférentiellement de 0.2 à 5 pce. L'amorceur peut être ajouté au milieu de polymérisation soit en totalité ou partiellement au début et/ou en continu ou de façon intermittente au cours de la polymérisation.

De manière connue pour contrôler le taux de gel et la macrostructure de l'élastomère, des agents de transfert peuvent être introduits dans le milieu de polymérisation et la conversion des monomères est limitée de préférence à 75%. A titre d'agents de transfert on peut citer les mercaptans de longueur de chaîne en C10-C14 tels que le n-dodécylmercaptan, le tert-dodécyl mercaptan, l'acide mercaptopropionique, le méthyl mercaptopropionate, ou les alcools ou des aldéhydes tels que l'isopropanol et l'acétaldéhyde, le diterpène, le terpinolène ou le gamma-terpinène et les thioglycols. De manière préférée, le ou les amorceurs représentent de 0.1 à 10 pce, de préférence de 0.2 à 10 pce, plus préférentiellement de 0.2 à 5 pce.

Pour stabiliser l'émulsion aqueuse, on utilise aussi de manière connue des agents tensioactifs. Le ou les agents tensioactifs utilisables dans le procède selon l'invention peuvent être choisis parmi les agents tensioactifs non ioniques, anioniques ou cationiques préférentiellement parmi les agents tensioactifs anioniques ou cationiques. A titre d'agents tensioactifs anioniques, on peut notamment citer tous les agents tensioactifs anioniques comprenant au moins un groupe alkyle en C6 -C40 ou au moins un cycle aromatique substitué par un groupe alkyle en C6 -C40, et au moins un groupe anionique choisi parmi les sulfates, les sulfonates, les phosphates, les phosphonates, et les carboxylates. De préférence, le ou les agents tensioactifs anioniques comprenant au moins un groupe alkyle en C6 -C40 ou au moins un cycle aromatique substitué par un groupe alkyle en C6 -C40 sont choisis parmi le stéarate de sodium, le laurylsulfate de sodium, le lauryléther sulfate de sodium, les acides résiniques déshydrogénés ainsi que leurs sels de métaux alcalins et les dodécylbenzene sulfonates de sodium et les mélanges de ces composés. A titre d'agents tensioactifs cationiques, on peut notamment citer tous les agents tensioactifs cationiques comprenant au moins un groupe alkyle en C6 -C40 ou au moins un cycle aromatique substitué par un groupe alkyle en C6 -C40, et au moins un groupe cationique choisi parmi les ammoniums et les pyridiums. De préférence, le ou les agents tensioactifs cationiques sont choisis parmi les sels d'alkyltriméthylammonium tels que le chlorure ou le bromure de triméthyldecylammonium et les sels de benzalkonium et les mélanges de ces composés. De manière préférée, le ou lesdits agents tensioactifs utilisables dans le procède selon l'invention sont choisis parmi le chlorure de triméthyldécylammonium, le sodium dodécylsulfate et le stéarate de sodium. De manière préférée, le ou les agents tensioactifs représentent de 1 à 20 pce, en particulier de 1 à 10 pce.

Egalement de manière connue pour éviter la dégradation possible de l'amorceur en stabilisant le pH de l'émulsion, on peut utiliser un tampon. A titre d'exemple, on peut citer les tampons phosphate tels que le mélange de dihydrogénophosphate d'ammonium et d'hydrogénophosphate de di-sodium De manière préférée, dans le cas où le ou les tampons sont incorporés au milieu réactionnel, ils représentent de 1 à 20 pce, en particulier de 1 à 10 pce.

Le procédé de polymérisation est généralement conduit dans un réacteur dépourvu d'oxygène à une température de polymérisation variant de 0 à 100°C, préférentiellement de 5 à 70°C, plus préférentiellement entre 5 et 10°C ou entre 35 et 60°C et avec éventuellement des changements de température graduelle ou par pallier. La polymérisation peut être réalisée en continu ou en discontinu.

Afin de stopper la réaction de polymérisation à la bonne conversion, de manière connue, on introduit typiquement un réducteur, le stoppeur. A titre d'exemple, on peut citer la famille des phénols tels que l'hydroquinone, le résorcinol, les hydroxylamines telles que la N, N-diéthylhydroxylamine. De manière préférée, le ou les stoppeurs représentent de 0.05 à 5 pce, en particulier de 0,1 à 3 pce.

Une fois synthétisé, le polymère peut être aussi bien à l'état de latex qu'à l'état solide par exemple pour être

mélangé à une charge renforçante en vue de préparer une composition. Pour récupérer le polymère en phase latex et sans monomères résiduels, il est préférable de réaliser une étape de dévolatilisation de ces monomères le plus généralement par entrainement à la vapeur d'eau (stripping). Pour récupérer le polymère sous forme solide, il est nécessaire d'ajouter une étape de déstabilisation de l'émulsion avec ou sans une étape de stripping au préalable et une étape de séchage du coagulum.

En fin de polymérisation, les monomères résiduels sont de préférence éliminés par une étape de dévolatisation. Ensuite, on déstabilise l'émulsion avec ou sans une étape de stripping au préalable. Pour éviter une ouverture des fonctions carbonate cyclique, on déstabilise l'émulsion par addition d'un tiers corps, par exemple un sel inorganique tel que du chlorure de calcium, de magnésium de potassium ou de sodium, du sulfate de sodium, de magnésium ou de sodium ou d'un sel organique tel que de l'acétate de magnésium ou de calcium. La coagulation du latex peut être également réalisée par l'addition d'un solvant choisi parmi les cétones et les alcools et notamment l'acétone, le méthanol, l'isopropanol le n-butanol et l'éthanol. Le coagulum est ensuite généralement lavé à l'eau. Enfin, on procède au séchage du polymère une fois coagulé. De préférence, le polymère peut être séché sous vide ou à pression atmosphérique sous balayage d'azote. Les températures de séchage peuvent varier de la température ambiante (25°C) à 130°C, préférentiellement de la température ambiante à 100°C, et plus préférentiellement de la température ambiante à 70°C. Les temps de séchage sont typiquement compris entre 10 et 72 h, de préférence entre 16 h et 50 h.

La charge renforçante utile aux besoins de l'invention peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé généralement de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices « Ultrasil » 7000 et « Ultrasil » 7005 de la société Degussa, les silices « Zeosil » 1165MP.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Selon un mode de réalisation particulier de l'invention, la charge inorganique, préférentiellement une silice, représente plus de 50% en masse de la masse de la charge renforçante de la composition de caoutchouc. On dit alors que la charge inorganique renforçante est majoritaire.

Lorsqu'il est combiné à une charge inorganique renforçante majoritaire telle que la silice, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p/po :* 0.05

à 0.17). La surface spécifique CTAB est la surface externe déterminée selon la norme française NF T 45-007 de novembre 1987 (méthode B).

De manière préférentielle, le taux de charge renforçante totale est compris entre 30 et 160 pce, plus préférentiellement entre 40 pce et 160 pce. En deçà de 30 pce, le renforcement de la composition de caoutchouc peut s'avérer insuffisant pour apporter un niveau de cohésion adéquat du composant caoutchouteux du pneumatique comprenant cette composition. De manière encore plus préférentielle, le taux de charge renforçante totale est d'au moins 50 pce .Au-delà de 160 pce, il existe un risque d'augmentation de l'hystérèse et donc de la résistance au roulement des pneumatiques. Pour cette raison, le taux de charge renforçante totale est de préférence dans un domaine allant de 50 à 120 pce. L'une quelconque de ces plages de taux de charge renforçante totale peut s'appliquer à l'un quelconque des modes de réalisation de l'invention.

Pour coupler la charge inorganique renforçante à l'élastomère diénique, on peut utiliser de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère. Les agents de couplage sont en particulier des organosilanes ou des polyorganosiloxanes au moins bifonctionnels. On peut utiliser des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

La composition de caoutchouc conforme à l'invention peut également contenir, en complément des agents de couplage ou à la place des agents de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

Ces agents de recouvrement sont par exemple des silanes hydrolysables tels que des alkylalkoxysilanes, notamment des alkyltrialcoxysilanes, des polyols, des polyéthers, des amines primaires, secondaires ou tertiaires. A titre d'exemple, on peut citer la triméthoxy(octyl)silane, la diphénylguanidine. Les agents de recouvrement peuvent être utilisés seul ou en mélange.

Lorsqu'un agent de couplage est utilisé, sa teneur est avantageusement inférieure à 20 pce, étant entendu qu'il est en général souhaitable d'en utiliser le moins possible. Typiquement le taux d'agent de recouvrement représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Lorsqu'un ou plusieurs agents de recouvrement sont utilisés, la teneur global est avantageusement inférieure à 20 pce, étant entendu qu'il est en général souhaitable d'en utiliser le moins possible. Typiquement le taux global d'agent de recouvrement représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

La composition de caoutchouc peut aussi contenir un élastomère diénique autre que l'élastomère utile aux besoins de l'invention. Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Selon l'un quelconque des modes de réalisation de l'invention, la composition de caoutchouc comprend préférentiellement plus de 50 pce, plus préférentiellement 75 pce de l'élastomère diénique utile aux besoins de l'invention.

La composition de caoutchouc conforme à l'invention peut comporter également tout ou partie des additifs usuels habituellement utilisés dans les compositions d'élastomères destinées à constituer des mélanges d'articles finis en caoutchouc tels que des pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, un système de réticulation.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus

basse température, typiquement inférieure à 110°C, par exemple entre 40°C et 100°C, phase de finition au cours de laquelle est incorporé le système de réticulation.

L'élastomère utile aux besoins de l'invention est généralement introduit au cours de la phase dite non productive pour être malaxé thermomécaniquement avec la charge renforçante et éventuellement les autres ingrédients à l'exception du système de réticulation.

La composition de caoutchouc peut être préparée par un procédé qui comprend les étapes suivantes :

- incorporer à l'élastomère, au cours d'une première étape dite non productive, la charge renforçante, le cas échéant un agent de couplage ou un agent de recouvrement, en malaxant thermomécaniquement jusqu'à atteindre une température maximale comprise entre 130 et 200°C,
- refroidir l'ensemble à une température inférieure à 100°C,
- incorporer ensuite un système de réticulation,
- malaxer le tout jusqu'à une température maximale inférieure à 120°C,

l'agent de couplage, l'agent de recouvrement et le système de réticulation pouvant être l'un quelconque des composés mentionnés précédemment comme pouvant faire office respectivement d'agent de couplage, d'agent de recouvrement et de système de réticulation.

Alternativement, au lieu d'être introduits successivement, l'élastomère et la charge renforçante peuvent introduits sous la forme d'un mélange maître (en anglais « masterbatch ») au cours de la première étape dite non productive.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique.

La composition de caoutchouc conforme à l'invention, peut être soit à l'état cru (avant réticulation ou vulcanisation), soit à l'état cuit (après réticulation ou vulcanisation). Elle est utilisée préférentiellement dans un pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

### II.1-Mesures et tests utilisés :

II.1-1 Détermination de la température de transition vitreuse :

Les températures de transition vitreuse Tg des polymères sont mesurées au moyen d'un calorimètre différentiel ("Differential Scanning Calorimeter") selon la norme ASTM D3418-08.

Chromatographie d'exclusion stérique (SEC) :

La chromatographie d'exclusion stérique (ou Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Il n'y a pas de traitement particulier de l'échantillon de polymère avant analyse. Celui-ci est simplement solubilisé, dans une solution de tétrahydrofurane contenant 1 % en volume de diisopropylamine, 1 % en volume de triéthylamine et 1 % en volume d'eau distillée, à une concentration d'environ 1 g/l. Puis, la solution est filtrée sur filtre de porosité 0,45 μm avant injection. L'appareillage utilisé est un chromatographe « WATERS alliance ». Le solvant d'élution est du tétrahydrofurane contenant 1% en volume de diisopropylamine et 1% en volume de triéthylamine. Le débit est de 0,7 ml/min, la température du système est de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ». Le volume injecté de la solution de l'échantillon de polymère est 100 μl. Le détecteur est un réfractomètre différentiel « WATERS 2410 » et le logiciel d'exploitation des données chromatographiques est le système « WATERS EMPOWER ». Les masses molaires moyennes calculées sont relatives à une courbe d'étalonnage réalisée à partir de polystyrènes étalons commerciaux « PSS READY CAL-KIT ».

Détermination du taux de macrogel :

Le polymère (masse prélevée P) est mis en solution dans le toluène à une concentration à 5 g/L. Le milieu est agité pendant 6 h minimum puis filtré sur un filtre métallique (grille inox) préalablement pesé (P1). Le filtre est ensuite séché à 80°C sous vide pendant 1h puis refroidi dans un dessiccateur pendant 30 min. Après ce traitement la grille est pesée (P2).
Le taux d'insoluble est donné par la formule

$$T= 100*(P2-P1)/P$$

Spectroscopie de résonance magnétique nucléaire (RMN)

Les déterminations des taux de fonctions carbonate sur la chaîne polymère sont réalisées par une analyse RMN. Les spectres sont acquis sur un spectromètre 500 MHz BRUKER équipé d'une sonde « large bande » BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deuteré.
Le spectre RMN $^1H$ permet de quantifier le taux de fonction carbonate incorporée au sein de la chaine par intégration des signaux caractéristiques des protons des motifs unités. L'abréviation MCA désigne l'unité monomère de formule (IV-u), PB1,2 et PB1,4 les unités monomères du 1,3-butadiène inséré dans la chaîne par addition 1,2 et 1,4 respectivement.

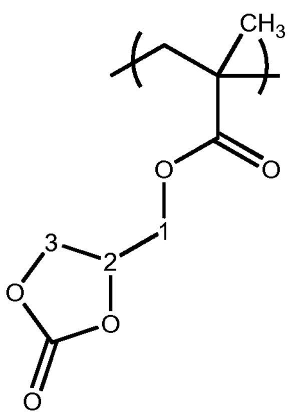

(IV-u)

4H correspondant au $CH_2$ n°1 MCA + $CH_2$ n°3 MCA : de 3,3 à 4,5 ppm
2H+1H correspondant au PB1,2 + CH n°2 MCA : de 4,5 à 4,9 ppm
2H+1H correspondant au PB1,4 + PB1,2 : de 4,9 à 5,8 ppm
5H Motif Styrène : 7.41ppm à 6.5ppm.
Les résultats de répartition styrène sont donnés sous forme W/X/Y/Z avec :

W : n = 1, 2 et 3 (répartitions statistiques) : intégration entre 7,2 et 6,71 ppm
X : n = 4 et 5 (répartitions non statistiques) : intégration entre 6,71 et 6,56 ppm
Y : 6 ≤ n ≤ 10 (microblocs) : intégration entre 6,56 et 6,29 ppm
Z : n > 10 (macroblocs) : intégration entre 6,29 et 6,05 ppm.

Essais de traction :

Ces essais permettent de déterminer les contraintes d'élasticité et les propriétés à la rupture après cuisson. Sauf indication différente, ils sont effectués conformément à la norme française NF T 46-002 de septembre 1988. On mesure en première élongation (i.e., sans cycle d'accommodation) les modules sécants vrais (i.e., calculés en se ramenant à la section réelle de l'éprouvette), exprimés en MPa, à 100% d'allongement (modules notés M100), à 300% d'allongement (M300). Toutes ces mesures de traction sont effectuées dans les conditions normales de température et d'hygrométrie (23 +- 2[deg.]C ; 50 +- 5% d'humidité relative).

Propriétés dynamiques :

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions normales de température (23°C) selon la norme ASTM D 1349-99, ou selon les cas à une température différente (60°C).
On effectue un balayage en amplitude de déformation de 0,1% à 100% (cycle aller), puis de 100% à 0,1% (cycle retour). Les résultats exploités sont le module élastique (G').

**II.2-Réactifs**

Dans l'ensemble des exemples mentionnés ci-dessous, le dodécylsulfate de sodium, le sulfate de fer, l'hydroperoxyde de cumène, le pyrophosphate de sodium, le persulfate de potassium, le terdodécylmercaptan, la N, N-diéthylhydroxylamine, le résorcinol, l'hydrogéno-phosphate de sodium et le dihydrogénophosphate d'ammonium sont commercialisés par Aldrich. Le méthacrylate de 4-(hydroxyméthyl)-1,3-dioxolan-2-one provient de chez Specific Polymers. Le styrène et le butadiène sont purifiés par passage sur garde d'alumine et par barbotage à l'azote.

**II.3-Synthèse du terpolymère de styrène, butadiène et de méthacrylate de 4-(hydroxyméthyl)-1,3-dioxolan-2-one (CCMA) par polymérisation à froid**

Préparation au préalable des charges suivantes :

- Suspension dans l'eau de $Na_2FeP_2O_7$ à 0,0627 mol/L : le $FeSO_4$, $7H_2O$ et le $Na_4P_2O_7$ sont dilués dans de l'eau barbotée, puis le mélange est chauffé à 60°C pendant 45 minutes en agitant régulièrement
- Préparation d'une solution d'hydroperoxyde de cumène dans le styrène à 0,079 mol/L
- Préparation d'une solution de mercaptan (R-SH) dans le styrène à 0,223 mol/L
- Préparation d'une solution de N,N-diéthylhydroxylamine dans l'eau à 10 g/L

On charge le réacteur selon les opérations suivantes :

- introduire l'eau barbotée pendant une demi-heure à 25°C (volume final 22,3 mL)
- puis le dodécylsulfate de sodium (SDS) sous azote à 25°C suivi d'un balayage à l'azote de 10 min (0,3 g)
- injecter la charge de styrène contenant le R-SH à 25°C sous azote (1 mL de solution à 0,223 mol/L)
- refroidir le réacteur pour atteindre 5°C
- quand le réacteur atteint environ 12°C, injecter le reste de styrène (1,815 mL, 1.65 g) et le CCMA (0,39 mL, 0,56g), sous azote
- injecter alors la charge de butadiène (9,88 mL, 6,42 g)
- laisser refroidir le réacteur jusqu'à 5°C, puis injecter la solution de $Na_2FeP_2O_7$ (1,7 mL de solution à 0,0627 mol/L)
- attendre 5 minutes, puis injecter l'amorceur, la solution d'hydroperoxyde de cumène dans le styrène (0,5 mL)

La fin de l'ajout de l'amorceur marque le début de la polymérisation (soit t=0 min).
L'agitation est maintenue à 5°C durant 7 h 15 pour atteindre environ 63 % de conversion finale (essai 1) et durant 4 h 45 pour atteindre environ 72 % de conversion finale (essai 2). Enfin, une solution de stoppage de N,N-diéthylhydroxylamine dans l'eau est préparée. Le latex est alors stoppé par transvasement par pression résiduelle des monomères sur cette solution de stoppage. Le latex est ensuite coagulé par addition de 50 mL d'acétone. Le coagulum est séché sous vide partiel et sous balayage d'azote pendant 48 h à 40°C.
Les conditions opératoires pour l'essai n°1 sont répertoriées dans le tableau 1 suivant. Les conditions opératoires pour l'essai n°2 sont répertoriées dans le tableau 2 suivant.

Tableau 1

| | | |
|---|---|---|
| Eau | | 22.3 mL |
| SDS | 3 pce | 0.3 g |
| RSH | 0,16 pce | 0.016 g |
| $FeSO_4$, $7H_2O$ | 0,28 pce | 0.028 g |

(suite)

| | | |
|---|---|---|
| Eau | | 22.3 mL |
| $Na_4P_2O_7$ | 0,266 pce | 0.026 g |
| $\%_{massique}$ Styrène ($\%_{mol}$) | 30,14% (19%) | 3.014 g |
| $\%_{massique}$ Butadiène ($\%_{mol}$) | 64.23% (79%) | 6.42 g |
| $\%_{massique}$ CCMA ($\%_{mol}$) | 5,63% (2%) | 0.56 g |
| Hydroperoxide de cumène | 0,17 pce | 0.017 g |
| N, N-diéthylhydroxylamine | 0,1 pce | 0.01g |

Tableau 2

| | | |
|---|---|---|
| Eau | | 22.3 mL |
| SDS | 3 pce | 0.3 g |
| RSH | 0,16 pce | 0.016 g |
| $FeSO_4$, $7H_2O$ | 0,28 pce | 0.028 g |
| $Na_4P_2O_7$ | 0,266 pce | 0.026 g |
| $\%_{massique}$ Styrène ($\%_{mol}$) | 25,47% (18%) | 2.55 g |
| $\%_{massique}$ Butadiène ($\%_{mol}$) | 54.3% (74%) | 5.43 g |
| $\%_{massique}$ CCMA ($\%_{mol}$) | 20,23% (8%) | 2.02 g |
| Hydroperoxide de cumène | 0,17 pce | 0.017 g |
| N, N-diéthylhydroxylamine | 0,1 pce | 0.01g |

Les polymères obtenus ont été caractérisés par les analyses RMN, DSC, SEC et la mesure du taux de macrogel. Les résultats des caractérisations figurent dans le tableau I.

## II.4-Préparation et caractérisation des compositions de caoutchouc :

Pour préparer les compositions A et T, on procède pour les essais qui suivent de la manière suivante:
On introduit dans un mélangeur interne (taux de remplissage final environ 70% en volume), dont la température initiale de cuve est d'environ 100°C, successivement l'élastomère, la charge renforçante et les autres additifs. On conduit alors un travail thermomécanique (phase non-productive) en une étape (durée totale du malaxage égale à environ 5 min), jusqu'à atteindre une température maximale de "tombée" allant de 145 à 165°C selon les compositions. On récupère le mélange ainsi obtenu, on le refroidit puis on ajoute le système de vulcanisation sur un mélangeur externe pour y réaliser une seconde phase de travail mécanique à environ 80°C.
Les compositions de caoutchouc sont données dans le tableau 3 suivant. Les quantités sont exprimées en parties pour 100 parties en poids d'élastomère.

Tableau 3

| | Composition A | Composition T |
|---|---|---|
| Polymère A | 100 | - |
| SBR | - | 100 |
| Noir de carbone (1) | 1 | 1 |
| Silice (2) | 67 | 67 |
| Résine (3) | 31 | 31 |
| Antioxydant (4) | 3 | 3 |

(suite)

| | Composition A | Composition T |
|---|---|---|
| Paraffine | 1 | 1 |
| Triméthoxy(octyl)silane | 5,4 | 5,4 |
| Diphénylguanidine | 2,5 | 2,5 |
| Stéarine (5) | 3 | 3 |
| ZnO (6) | 0,9 | 0,9 |
| Soufre | 1 | 1 |
| Accélérateur (7) | 2.3 | 2.3 |

(1) N234
(2) Silice microperlée de surface spécifique de 160m$^2$ / g
(3) Résine dicyclopentadiène C9 hydrogénée E5600 BR, Exxon Mobil
(4) 1,3-diméthylbutyl-N-phényl-para-phénylènediamine ("Santoflex 6-PPD" société Flexsys)
(5) Stéarine ("Pristerene 4931" - société Uniqema)
(6) oxyde de zinc (grade industriel - société Umicore)
(7) N-cyclohexyl-2-benzothiazyl-sulfénamide ("Santocure CBS" société Flexys).

La composition A se différencie de la composition T en ce que la composition A contient en tant qu'élastomère le polymère A conforme à l'invention, alors que la composition T contient en tant qu'élastomère un copolymère de styrène et de butadiène SBR. Le SBR dépourvu de fonction carbonate est un polymère non conforme à l'invention. Sa viscosité Mooney est de 53, sa Tg est de -48°C, similaire à celle du polymère A. La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney est exprimée en "unité Mooney" (UM, avec 1 UM=0,83 Newton.mètre).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques. Les compostions calandrées sont ensuite cuites sous presse pendant 30 min à 150°C, puis caractérisées.

Les résultats figurent dans le tableau II.

La mesure de $\Delta$C (Cmax-Cmin) exprimé en dN.m correspond à la différence de couple entre l'état initial (t=0, avant vulcanisation) et l'état final (t=30 min, après vulcanisation).

En comparaison au polymère SBR, le polymère A confère à la composition de caoutchouc un bien meilleur renforcement. En effet, le rapport des modules MA300/MA100 de la composition A est bien plus élevé que celui de la composition T. L'amélioration du renforcement est obtenue même en l'absence d'un agent de couplage pour coupler la silice à l'élastomère. Enfin, pour un renforcement amélioré, on note que la valeur de $\Delta$G' de la composition A est sensiblement plus faible que celle de la composition T, ce qui traduit un état de dispersion de la silice de la composition A améliorée par rapport à celle de la composition T.

Tableau I

| Polymère | Essai | caractérisations SEC | | | Caractérisation RMN | | | | caractérisation DSC |
|---|---|---|---|---|---|---|---|---|---|
| | | Mn (Kg/mol) | Ip | Taux de gel (%) | CCMA % $_{molaire}$ | Styrène % $_{molaire}$ | Butadiène % $_{molaire}$ | Répartition Styrène | Tg/delta |
| A | Essai 1 | 83 | 3,9 | <0.3 | 2,6 | 16.2 | 81,2 | 95/4/1/0 | -48/8 |
| B | Essai 2 | 89 | 2.7 | <0.3 | 10,4 | 14,5 | 75.2 | - | - |

Tableau II

| | Composition A | Composition T |
|---|---|---|
| M100 (MPa) | 3.70 | 1.18 |
| M300 (MPa) | 8.56 | 1.52 |
| M300/M100 | 2.32 | 1.29 |
| Déformation rupture (%) | 690 | 894 |
| ∆C (Cmax-Cmin) | 3.81 | 5.79 |
| ∆G' (0-100%) 60°C | 0.96 | 2.14 |

## Revendications

1. Composition de caoutchouc à base d'une charge renforçante et d'un élastomère comprenant des unités d'un monomère 1,3-diène et portant des fonctions carbonate présentes chacune dans un cycle 1,3-dioxolan-2-one.

2. Composition selon la revendication 1 dans laquelle les fonctions carbonate sont pendantes situés en dehors des extrémités de chaîne de l'élastomère.

3. Composition selon l'une quelconque des revendications 1 à 2 dans laquelle les fonctions carbonate sont présentes dans des unités monomères d'un monomère vinylique au moins substitué par un groupe contenant un cycle 1,3-dioxolan-2-one.

4. Composition selon la revendication 3 dans laquelle le monomère vinylique est un monomère vinylique contenant le groupe 2-oxo-1,3-dioxolan-4-yle de formule (I).

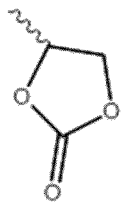

(I)

5. Composition selon l'une quelconque des revendications 3 à 4 dans laquelle le monomère vinylique est un monomère (méth)acrylate de formule (II)

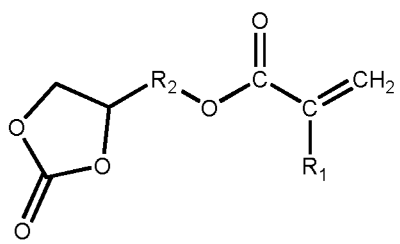

(II)

dans laquelle

$R_1$ est un hydrogène ou un méthyle,
$R_2$ est une chaîne hydrocarbonée pouvant être interrompue ou substituée par un ou plusieurs hétéroatomes.

6. Composition selon la revendication 5 dans laquelle le monomère (méth)acrylate de formule (II) est choisi dans le groupe constitué par les composés de formule (III), (IV), (V) et leurs mélanges, est préférentiellement le composé de formule (III), le composé de formule (IV) ou leur mélange.

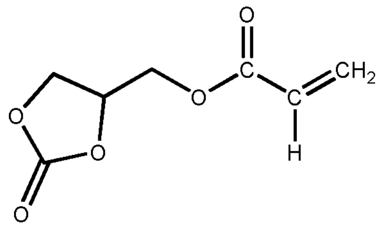

(III)

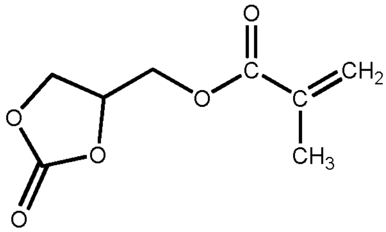

(IV)

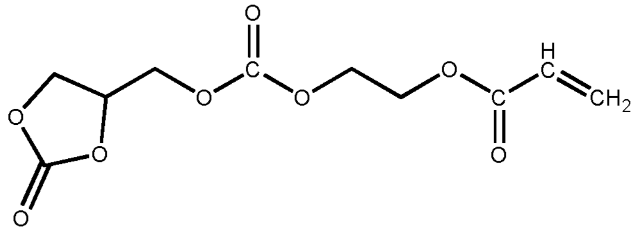

(VI)

**7.** Composition selon l'une quelconque des revendications 1 à 6 dans laquelle le taux de fonction carbonate est compris entre 0.1 et 20 moles pour 100 moles d'unités monomères constituant l'élastomère.

**8.** Composition selon l'une quelconque des revendications 1 à 7 dans laquelle le monomère 1,3-diène est le 1,3-butadiène, l'isoprène ou leur mélange, de préférence le 1,3-butadiène.

**9.** Composition selon l'une quelconque des revendications 1 à 8 dans laquelle les unités du monomère 1,3-diène représentent plus de 50% en masse de l'élastomère.

**10.** Composition selon l'une quelconque des revendications 1 à 9 dans laquelle l'élastomère contient des unités d'un monomère vinylaromatique, préférentiellement le styrène.

**11.** Composition selon l'une quelconque des revendications 10 dans laquelle les unités du monomère vinylaromatique représentent moins de 45% en masse du polymère, de préférence moins de 35% en masse.

**12.** Composition selon l'une quelconque des revendications 1 à 11, dans laquelle l'élastomère est un copolymère du 1,3-diène et du monomère vinylique ou un terpolymère du 1,3-diène, du monomère vinylique et du monomère vinylaromatique.

**13.** Composition selon l'une quelconque des revendications 1 à 12 dans laquelle la charge renforçante comprend un noir de carbone, une charge inorganique ou leur mélange.

**14.** Composition selon l'une quelconque des revendications 1 à 13 dans laquelle la charge renforçante comprend plus de 50% en masse de charge inorganique.

**15.** Pneumatique qui comprend une composition de caoutchouc définie à l'une quelconque des revendications 1 à 14.

## Patentansprüche

**1.** Kautschukzusammensetzung auf Basis eines verstärkenden Füllstoffs und eines Elastomers, das Einheiten eines 1,3-Dienmonomers umfasst und Carbonatfunktionen, die jeweils in einem 1,3-Dioxolan-2-onring vorliegen, trägt.

**2.** Zusammensetzung nach Anspruch 1, wobei die Carbonatfunktionen seitenständig außerhalb der Enden der Elastomerkette angeordnet sind.

**3.** Zusammensetzung nach einem der Ansprüche 1 bis 2, wobei die Carbonatfunktionen in Monomereinheiten eines Vinylmonomers, das mindestens durch eine einen 1,3-Dioxolan-2-onring enthaltende Gruppe substituiert ist, vorliegen.

4. Zusammensetzung nach Anspruch 3, wobei es sich bei dem Vinylmonomer um ein Vinylmonomer mit der 2-Oxo-1,3-oxolan-4-ylgruppe der Formel (I) handelt.

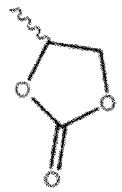

(I)

5. Zusammensetzung nach einem der Ansprüche 3 bis 4, wobei es sich bei dem Vinylmonomer um ein (Meth)acrylat-Monomer der Formel (II)

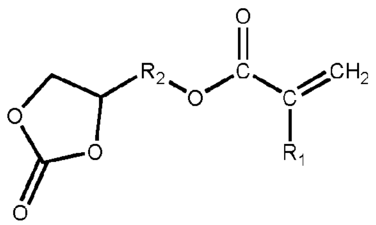

(II)

handelt, in der

$R_1$ für Wasserstoff oder Methyl steht,
$R_2$ für eine Kohlenwasserstoffkette, die durch ein oder mehrere Heteroatome unterbrochen oder substituiert sein kann, steht.

6. Zusammensetzung nach Anspruch 5, wobei das (Meth)-acrylat-Monomer (II) aus der Gruppe bestehend aus den Verbindungen der Formel (III), (IV), (V) und Mischungen davon ausgewählt ist und vorzugsweise die Verbindung der Formel (III), die Verbindung der Formel (IV) oder eine Mischung davon ist.

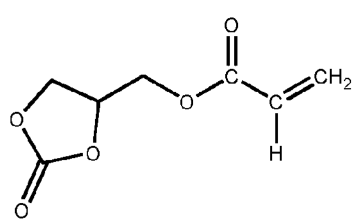

(III)

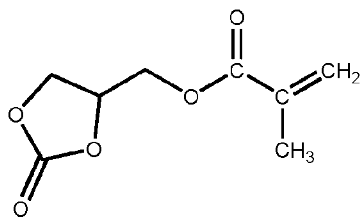

(IV)

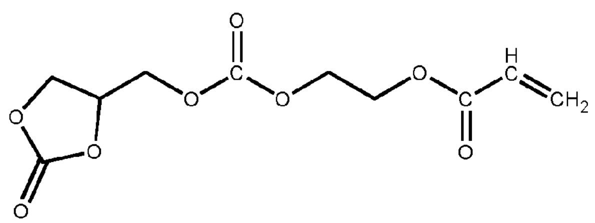

(VI)

7. Zusammensetzung nach einem der Ansprüche 1 bis 6, wobei der Gehalt an Carbonatfunktionen zwischen 0,1 und 20 Mol pro 100 mol Monomereinheiten, aus denen das Elastomer aufgebaut ist, liegt.

8. Zusammensetzung nach einem der Ansprüche 1 bis 7, wobei es sich bei dem 1,3-Dienmonomer um 1,3-Butadien,

Isopren oder eine Mischung davon, vorzugsweise 1,3-Butadien, handelt.

**9.** Zusammensetzung nach einem der Ansprüche 1 bis 8, wobei die Einheiten des 1,3-Dienmonomers mehr als 50 Massen-% des Elastomers ausmachen.

**10.** Zusammensetzung nach einem der Ansprüche 1 bis 9, wobei das Elastomer Einheiten eines vinylaromatischen Monomers, vorzugsweise Styrol, enthält.

**11.** Zusammensetzung nach einem der Ansprüche 10, wobei die Einheiten des vinylaromatischen Monomers weniger als 45 Massen-% des Polymers, vorzugsweise weniger als 35 Massen-%, ausmachen.

**12.** Zusammensetzung nach einem der Ansprüche 1 bis 11, wobei es sich bei dem Elastomer um ein Copolymer des 1,3-Diens und des Vinylmonomers oder ein Terpolymer des 1,3-Diens, des Vinylmonomers und des vinylaromatischen Monomers handelt.

**13.** Zusammensetzung nach einem der Ansprüche 1 bis 12, wobei der verstärkende Füllstoff einen Ruß, einen anorganischen Füllstoff oder eine Mischung davon umfasst.

**14.** Zusammensetzung nach einem der Ansprüche 1 bis 13, wobei der verstärkende Füllstoff mehr als 50 Massen-% anorganischen Füllstoff umfasst.

**15.** Reifen, der eine Kautschukzusammensetzung gemäß einem der Ansprüche 1 bis 14 umfasst.

## Claims

**1.** Rubber composition based on a reinforcing filler and on an elastomer comprising units of a 1,3-diene monomer and bearing carbonate functions, each present in a 1,3-dioxolan-2-one ring.

**2.** Composition according to Claim 1, wherein the carbonate functions are pendant, located outside the ends of the elastomer chain.

**3.** Composition according to either one of Claims 1 and 2, wherein the carbonate functions are present in monomer units of a vinyl monomer that is at least substituted by a group containing a 1,3-dioxolan-2-one ring.

**4.** Composition according to Claim 3, wherein the vinyl monomer is a vinyl monomer containing the group 2-oxo-1,3-dioxolan-4-yl of formula (I).

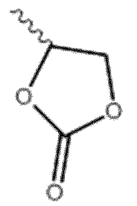

(I)

**5.** Composition according to any one of Claims 3 to 4, wherein the vinyl monomer is a (meth)acrylate monomer of formula (II)

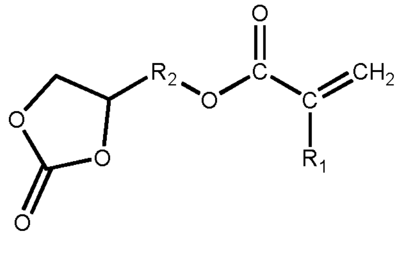

(II)

in which:

$R_1$ is a hydrogen or a methyl,
$R_2$ is a hydrocarbon-based chain which may be interrupted or substituted by one or more heteroatoms.

**6.** Composition according to Claim 5, wherein the (meth)acrylate monomer of formula (II) is selected from the group consisting of compounds of formula (III), (IV), (V) and mixtures thereof, preferably is the compound of formula (III), the compound of formula (IV), or the mixture thereof.

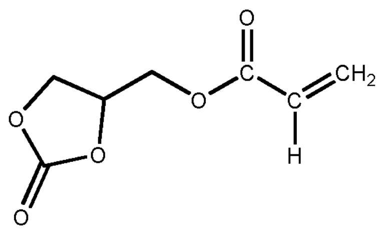

(III)

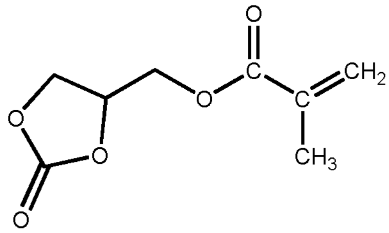

(IV)

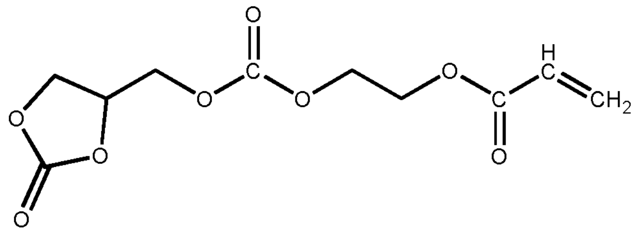

(V)

**7.** Composition according to any one of Claims 1 to 6, wherein the content of carbonate functions is between 0.1 and 20 mol per 100 mol of monomer units constituting the elastomer.

**8.** Composition according to any one of Claims 1 to 7, wherein the 1,3-diene monomer is 1,3-butadiene, isoprene or the mixture thereof, preferably 1,3-butadiene.

**9.** Composition according to any one of Claims 1 to 8, wherein the units of the 1,3-diene monomer represent more than 50% by weight of the elastomer.

**10.** Composition according to any one of Claims 1 to 9, wherein the elastomer contains units of a vinylaromatic monomer, preferably styrene.

**11.** Composition according to Claim 10, wherein the units of the vinylaromatic monomer represent less than 45% by weight of the polymer, preferably less than 35% by weight.

**12.** Composition according to any one of Claims 1 to 11, wherein the elastomer is a copolymer of the 1,3-diene and of the vinyl monomer or a terpolymer of the 1,3-diene, of the vinyl monomer and of the vinylaromatic monomer.

**13.** Composition according to any one of Claims 1 to 12, wherein the reinforcing filler comprises a carbon black, an inorganic filler or the mixture thereof.

**14.** Composition according to any one of Claims 1 to 13, wherein the reinforcing filler comprises more than 50% by weight of inorganic filler.

**15.** Tyre which comprises a rubber composition defined in any one of Claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2001090237 A
- US 20070191578 A
- WO 2014032803 A
- WO 03002648 A
- US 2005016651 A
- WO 03002649 A
- US 2005016650 A


### Littérature non-brevet citée dans la description


- PAC. IUPAC, 1996, vol. 68, 2287
- **BRUNAUER-EMMETT-TELLER.** *The Journal of the American Chemical Society,* Février 1938, vol. 60, 309